(19) Europäisches Patentamt
European Patent Office
Office européen des brevets

(11) **EP 4 010 769 B1**

(12) **EUROPEAN PATENT SPECIFICATION**

(45) Date of publication and mention
of the grant of the patent:
**31.07.2024 Bulletin 2024/31**

(21) Application number: **20753353.0**

(22) Date of filing: **06.08.2020**

(51) International Patent Classification (IPC):
*G05B 23/02* (2006.01)     *B60W 40/10* (2012.01)
*B60W 50/00* (2006.01)

(52) Cooperative Patent Classification (CPC):
**G05B 23/0297**

(86) International application number:
**PCT/EP2020/072196**

(87) International publication number:
**WO 2021/028322 (18.02.2021 Gazette 2021/07)**

(54) **A METHOD FOR DETERMINING A SENSOR CONFIGURATION**

EIN VERFAHREN ZUR BESTIMMUNG EINER SENSORKONFIGURATION

UNE MÉTHODE POUR DÉTERMINER LA CONFIGURATION D'UN CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2019 DE 102019121589**

(43) Date of publication of application:
**15.06.2022 Bulletin 2022/24**

(73) Proprietor: **Compredict GmbH
64283 Darmstadt (DE)**

(72) Inventors:
• **FIETZEK, Rafael
64293 Darmstadt (DE)**
• **FOULARD, Stéphane Gérard Louis Albert
63110 Rodgau (DE)**

• **ESBEL, Ousama
64283 Darmstadt (DE)**

(74) Representative: **Witte, Weller & Partner
Patentanwälte mbB
Postfach 10 54 62
70047 Stuttgart (DE)**

(56) References cited:
**US-A1- 2008 312 756**

• **CANALE M ET AL: "A study on the use of virtual
sensors in vehicle control", DECISION AND
CONTROL, 2008. CDC 2008. 47TH IEEE
CONFERENCE ON, IEEE, PISCATAWAY, NJ,
USA, 9 December 2008 (2008-12-09), pages 4402
- 4407, XP031401915, ISBN: 978-1-4244-3123-6**

**Description**

The present invention relates to a method for determining a sensor configuration in a vehicle which includes a plurality of sensors.

Modern vehicles include a large number of sensors for detecting a variety of state variables, as for example rotational speeds of wheels, shafts, gears etc., temperature, force, torque, voltage, current, acceleration about roll axis, pitch axis, yaw axis, etc. Further, vehicles sometimes include sensors that determine a location of the vehicle, or a distance of the vehicle from other vehicles or from obstacles. Other sensors are cameras that detect visual or non-visual images, for example rear view cameras, infrared cameras etc. The sensors are based on a variety of different technologies, like for example rotary encoders, temperature probes, voltmeters, radar transmitters and receivers, CCD chips, etc.

The large number of sensors in a vehicle contribute to the weight, the complexity and the costs of the vehicle.

Canale M. et al: "A study on the use of virtual sensors in vehicle control" Decision and Control, 2008. CDC 2008. 47th IEEE Conference on, IEEE, Piscataway, NJ, USA December 9, 2008 - ISBN 978-1-4244-3123-6 relates to the design of a direct virtual sensor (DVS), wherein DVS technology can be taken into account to replace physical sensors.

US 2008/312756 A1 relates to a method for providing sensors for a machine. The method may include obtaining data records including data from a plurality of sensors for the machine and determining a virtual sensor corresponding to one of the plurality of sensors. The method may also include establishing a virtual sensor process model of the virtual sensor indicative of interrelationships between at least one sensing parameters and a plurality of measured parameters based on the data records and obtaining a set of values corresponding to the plurality of measured parameters. Further, the method may include calculating the values of the at least one sensing parameters substantially simultaneously based upon the set of values corresponding to the plurality of measured parameters and the virtual sensor process model and providing the values of the at least one sensing parameters to a control system.

The present invention aims to at least partially solve the above problems.

The above object is achieved by a method for determining a sensor configuration in a vehicle which includes a plurality of sensors, comprising the steps of: establishing a preliminary sensor configuration for the vehicle, which sensor configuration includes a first number of real sensors, each of which outputting a real sensor signal; determining whether at least one of the real sensors can be replaced by a virtual sensor; and changing the preliminary sensor configuration into a final sensor configuration which includes a second number of real sensors and at least one virtual sensor, wherein the second number is smaller than the first number.

A real sensor is a piece of hardware that measures a certain state variable, particularly a physical entity, as for example a rotational speed, a force, a torque, light, etc.

A virtual sensor is a software module that receives at least one measurement signal from a real sensor and optionally other parameters and/or variables or signals, and calculates a physical target value from these inputs, preferably in real time.

The basic idea of the present invention is to find an optimum sensor configuration both in real and virtual sensors of the vehicle, namely to replace as many real sensors as possible by virtual sensors and to find preferably an optimum between the accuracy that can be achieved by the virtual sensors and the costs produced by real sensors.

The step of determining whether at least one of the real sensors can be replaced by a virtual sensor includes preferably the use of artificial intelligence, particularly the use of machine learning technology.

In many cases, real sensor signals are recorded and then evaluated. The recording of the real sensor signals may be conducted during a test run of the vehicle, wherein the evaluation of the recorded real sensor signals is conducted subsequently on a stationary evaluation computer.

In an alternative embodiment, the recording of the real sensor signals is conducted during a test run of the vehicle, wherein the evaluation of the recorded real sensor signals and the replacement of at least one of the real sensors by a virtual sensor is conducted during the test run on a mobile evaluation computer.

In addition, it is possible to conduct at least one of the recording of the real sensor signals, the evaluation of the recorded real sensor signals and the replacement of at least one of the real sensors by a virtual sensor on a simulation computer.

The use of a mobile evaluation computer has the advantage that the impact of the replacement of a real sensor on the vehicle behavior can be immediately experienced. On the other hand, the use of a simulation computer has the advantage that real test drives can be dispensed with.

In some evaluation examples, the step of determining whether at least one of the real sensors can be replaced by a virtual sensor is not conducted for each of the real sensors. Rather, some of the real sensors may be categorized as "irreplaceable", due to safety considerations, for example. Secondly, some sensors are very cheap and have a low weight. Therefore, one might consider to conduct the evaluation whether a certain real sensor can be replaced by a virtual sensor only in case that the real sensor has a significant weight and/or has significant costs. Further, some real sensors in certain environments can be defined as "must be replaced". This applies for example to development environments, in which the preliminary sensor configuration includes not only sensors that are to be realized in the vehicle that is being produced. Rather, such development environment may include sensors that are set up and connected for development purposes only. These "development sensors" are not available anymore in the series-production vehicle, and therefore are considered to be "must be replaced".

In addition, accuracy of the virtual sensor may be a relevant consideration, as well as a time delay which a virtual sensor might have in comparison to the real sensor. The time delay might be caused by complex calculations on the basis of the inputs to the virtual sensor. On the other hand, some virtual sensors may not be as accurate as the real sensor which is replaced by this virtual sensor. The loss of accuracy and the time delay may have an impact on the vehicle behavior which, in some cases, is to be analyzed and evaluated as well in order to determine whether the replacement of a real sensor is possible or not. The question of whether a real sensor can be replaced by a virtual sensor is therefore often not a clear yes or no but a matter of considering several boundary conditions that might, in addition, be weighted in order to arrive at a preferred final sensor configuration.

In addition, while it is possible to replace a real sensor for cost reasons, the present invention might also be used in order to not replace a real sensor but create a secondary - virtual - sensor for the real sensor, so as to improve redundancy and possibly safety of the sensor configuration.

The object is achieved in full. The invention is defined by the independent claims.

According to the invention, the determining step includes recording the real sensor signals of at least a subset of the first number of real sensors, evaluating the recorded real sensor signals in order to determine whether at least a first one of the real sensors can be replaced by a first virtual sensor that receives at least one real sensor signal from a second real sensor and outputs a virtual sensor signal that emulates the real sensor signal of the first real sensor.

As discussed above, the evaluating step can be conducted in a number of different steps.

In a preferred embodiment, the evaluating step includes the use of a Boltzmann machine having a number of visible nodes, each visible node representing a real sensor, and having a number of hidden nodes, the hidden nodes being computed by exploiting combinations of nodes.

The use of a Boltzmann machine in the evaluating step is a brute force approach. The Boltzmann machine is an undirected generative stochastic neural network that can learn the probability distribution over its set of inputs. It is always capable of generating different states of a system.

A Boltzmann machine is able to represent any system with many states given infinite training data. In the present case, the system at first represents the preliminary sensor configuration. The visible nodes are features/inputs to the system which are the real sensors in the vehicle. The hidden nodes are nodes to be trained that will identify and exploit the combination of the visible nodes. Essentially, a Boltzmann machine tries to learn how the nodes are influencing each other by estimating the weights in their edges (edges resemble the conditional probability distributions).

In theory, once the model is trained, the Boltzmann machine is capable to reconstruct all sensors given only one sensor. In other words, this theoretical approach would lead to a concept wherein only one single physical sensor is necessary in order to construct all other sensors in a vehicle.

While in theory the Boltzmann machine is a great model and can solve many problems, in practice it is very difficult to implement. This is due to computations power because the increase of the number of nodes leads to an exponential increase of the edges/connections. If a preliminary sensor configuration uses 200 sensors in a vehicle, and if additional 400 hidden nodes are added, then the number of edges will be 600x(600-1)/2 = 179,700 edges.

Therefore, typically a restricted Boltzmann machine (RBM) is used, where nodes from the same type do not connect to each other. This concept is used to trade performance with the ability to run the computations. The RBM is trained and predicts in the same way as the Boltzmann machine, using a contrastive divergence algorithm.

A Boltzmann machine and a restricted Boltzmann machine are structures which might not respect the temporal dependency in a time series. Therefore, the Boltzmann machine that is used is preferably a Recurrent Temporal Restricted Boltzmann Machine. Namely, this Boltzmann machine can be used when dealing with signals and time series. The recurrent temporal restricted Boltzmann machine (RTRBM) uses Recurrent Neurons as memory cells that remember the path, and uses a back propagation through time in a contrastive divergence algorithm to train the model. A very advanced and powerful type of an RTRMB is a RNN-Gaussian dynamic Boltzmann machine which is preferably used to model the sensor configuration.

In general, and as explained above, the step of determining whether at least one of the real sensors can be replaced by a virtual sensor, is a function of an accuracy of the virtual sensor and/or of a driving behavior of the vehicle and/or of the costs of the real sensor to be replaced.

It is preferred here if the accuracy of the virtual sensor and/or the driving behavior of the vehicle and/or the costs of the real sensor to be replaced are weighted and are calculated to a target value.

The above concepts of determining whether at least one of the real sensors can be replaced by a virtual sensor are more or less based on a brute force approach. However, there are also ways to conduct this step on the basis of a causation analysis.

Accordingly, it is preferred if the determining step includes detecting and recording the outputs of at least a subset of the real sensors for a predetermined number of temporarily subsequent sampling steps, and conducting a causation analysis which determines causations between the recorded outputs of the real sensors.

The term causation or causality is to be understood as a relationship between causes and effects. The basic question in this approach is whether and to which extend one real sensor causes another real sensor. The terms causation, causality and correlation are used within this application in an exchangeable manner. For each of those terms, the broadest interpretation is to be applied.

Further, in the present application, if one sensor output causes another sensor output, this means essentially that the other sensor output is dependent on the one sensor output.

Preferably, the outputs of all sensors of the preliminary sensor configuration are passed to an algorithm which will decide whether sensors can be replaced, and which preferably is able to build a model of the sensor (the virtual sensor) that replaces the real sensor.

In a preferred embodiment, it can be assumed that the preliminary sensor configuration forms a sensor space X. A dependency graph which reflects the dependencies between the real sensors or the causations between the real sensors, has a plurality of edges, which can be built by the following statement:

$$\left\{ \forall x, \forall y \in X; E_{x,y} = C(x, y) + f \,\middle|\, x \neq y \right\}$$

In this statement, C is a bivariate causation function, f is a penalty factor taking for instance the cost or safety aspects (like redundancy) into account, and $E_{x,y}$ are the coefficients of the edges.

Some measures that are said to measure causal relations are Granger causality, Transfer Entropy, Conversion Cross Mapping, and Mutual information, while correlations can be estimated by Pearson Autocorrelation algorithms.

For each mentioned measure one has to specify a maximum lag (shift). The lag typically corresponds to a certain number of temporally spatial samples. In one lag, the number of samples of different sensors may be different, because different sensors may have different sampling frequencies. For example, if one signal has a sampling time of 10 ms (corresponding to a sampling frequency of 100 Hz) and if another signal has a sampling time of 100 ms, a lag of 10 would then mean for the first signal a time period of 100 ms that is being considered, and for the second signal a time period of 1 s. For any causation calculation, it does not matter if the signals have the same time basis or not. This might eventually be relevant for a training of a virtual sensor later on, however.

The result of the causation metrics is a matrix, which preferably includes the relations between the sensors. The relations or values or causations of the matrix are preferably normalized or standardized so that a maximum causation has a value of 1 and a minimal causation has a value of 0.

In a preferred embodiment, the causations between the recorded outputs of the real sensors are determined for at least a subset of the samples, wherein the causations determined for the subset of samples are subjected a post-processing in order to determination a final causation set or matrix between the recorded outputs of the real sensor.

A subset of samples can be defined to be a signal vector of the form [lag ; now], where lag < or = max lag.

Further, in a preferred embodiment, a Directed Cyclic Graph (DCG) is established on the basis of the determined causations. The weights in the directed edges explain "how much the sensor causes/correlates to the other sensor". One can detect cycles in a graph using a Depth-First Search (DFS) algorithm.

In order to find out which real sensor can be replaced best, it is preferred if the DCG is converted into a Directed Acyclic Graph (DAG), wherein either the real sensor with the highest or the one with the lowest causation is taken as a root for the DAG.

One can use several algorithms in order to convert the DCG to the DAG. Another strategy would be just taking the most dependent sensor as a root and build the tree from there.

The directed acyclic graph is a tree having a root and a stem and finally leaves. For example, sensors can be replaced by removing the leaves at the node of the tree. Each sensor at the leaves will go through a model identification pipeline where the target value is the sensor signal, that is to be reconstructed, and wherein the inputs are the corresponding parents in the tree. Further, one can remove more levels, but it should be born in mind that the more levels are removed, the less accurate the reconstruction would be.

As another example, it is possible to identify replaceable sensors by using a graph ranking algorithm on the DCG, in order to identify the most important sensors based on its outgoing and incoming causation edges. One such sensor is the personalized PageRank algorithm.

Correspondingly, it is preferred if at least one real sensor which forms a leave or a root, respectively, in the DAG is determined to be replaceable.

When a DCG is established, it is an alternative preferred approach to compute a rank matrix from the DCG, wherein at least one real sensor is determined to be low rank and thus replaceable.

The rank matrix may be computed on the basis of a ranking algorithm. One example for such ranking algorithm is the Page Rank algorithm as is used in search engines.

As another preferred example for using an DCG, it is possible to generate a stochastic probabilistic process from the DCG, wherein a state of at least one real sensor can be reached by the state of another real sensor and can thus be determined to be replaceable.

A stochastic probabilistic process can be realized by a probability algorithm, as for example Markov Chain Monte Carlo (MCMC).

Further, it is preferred if a mathematical model for the real sensor that has been determined to be replaceable, is determined on the basis of a statistic or deterministic approach (algorithm).

Particularly, for each pruned leaf from the previous step, the leaf is taken as a label and the causation branches (starting from the root to the leave) are taken as features to train a model. As an advantageous way to identify a model able to replace the given sensor (i.e. turn the real sensor into a virtual sensor), any statistical or deterministic algorithm that can learn the representation of signals can be used to build the model that will be used to reconstruct the sensor.

For example, a neural network architecture called Time Delayed Neural Network (TDNN) can be used.

Such network is a feed forward neural network that can be applied to time series. The general architecture will be used for all pruned leaves. However, hyperparameters of the model should be optimized using optimization algorithms in order to help the general algorithm architecture to be specific for the given problem, such as Grid search, Random search or Bayesian hyperparameter optimization.

For the example of the TDNN, the following hyperparameters can be optimized: number of neurons, number of layers, drop-out rate, etc.

Once the model is trained and evaluated against a test set, it is preferred if weights and parameters of the model are extracted and if the prediction of the model is calculated through feedforward calculation.

When using the approach of a causation analysis, there is one important aspect, which is that a causation can depend on the current system state. For example, the speeds involved with a transmission of the car might have the following causalities: while a starting clutch is closed, there is a high causality between the engine speed and the wheel speed. On the other hand, when the clutch is open, the causality is lower. There are several approaches to tackle this issue, like for instance:

1. One puts expertize knowledge into the calculation routine, for instance by increasing the penalty factor f defined in advance, or by defining the engine speed sensor as irreplaceable.

2. One can trigger the state difference with event recognition. For instance, in an automatic transmission like a double clutch transmission, there is a signal giving an information about the clutch state, so that one can differentiate between slip and stick phases. Therefore, one would get causality values for each of these states. Depending on these values, one can then decide if a sensor is replaceable in its "entirety" or not (i.e. meaning by considering again the time series as a unique signal and not anymore as a succession of events, and by assessing that one of the two causality values is too low, so that one can say that a given sensor is practically not replaceable).

3. One can go through the proposed causation calculation and identify the best lag. Once done, one can go through the time series again (by keeping the computed best lag) and calculate a kind of relative error for each single data point. On this basis, one can draw a relative error distribution over all the points. This way, one can see if the error is always concentrated in a given area or if there is a dispersion. In the second case, one might refuse to replace the sensor and give a penalty to it.

4. One can just keep the causation calculation as it is and not take care about the possible state-dependency, so that one would train the model for the virtual sensor anyway. At the end of the training, one would access the accuracy of the generated model. If it is not good enough, one might decide, afterwards, that the sensor is actually not replaceable (in any case, the ultimate decision of the replaceability of a sensor comes after the model is trained). If the model is good enough, then the sensor can be replaced, and the event-dependency might not have been crucial.

The whole method is highly parallelizable, where building the graph, building the model for each pruned leaf and model optimization can be multi-threaded.

Further, there are many ways to set the maximum lag. One heuristic approach is suggested by Schwert (1989) as a rule of thumb. It is calculated as following:

$$Max.\_lag = [12 \times (T/100)^{0,25}]$$

where T is the number of observations in a signal, i.e. the length of the signal. As mentioned, the Schwert rule of thumb is an ad hoc approach, and getting the lag value correctly is challenging because too small lag values will bias the statistical test. However, too large values will enlarge the power of the statistical test. There are many publications that suggest that it is better to error on the side that includes too many lags (type 2 error).

According to the invention, the determining step includes detecting and recording the outputs of at least a subset of the real sensors, and conducting a causation analysis which determines causations between the recorded outputs of the subset of real sensors, wherein the causation analysis includes building a component-wise neural network, CWNN, where each real sensor of the subset of real sensors corresponds to one of the components of the CWNN, wherein each component is formed by a virtual sensor which is trained so as to emulate a respective real sensor.

The virtual sensor is a sub-model of the neural network. According to the invention, the training step uses the outputs of some or each of the other real sensors of the subset of real sensors. Further, past outputs of the real sensor to be emulated (the so-called target) may be used as well for training the virtual sensor.

The virtual sensors (the sub-models) of the neural network may be trained individually or all together.

Preferably, the training step includes applying sparsity inducing penalty to respective first hidden layers of at least some of the virtual sensors.

Preferably, the sparsity inducing penalty is applied to respective first hidden layers of each of the virtual sensors. When applying sparsity inducing penalty, similar features are grouped together using *parameter tying* technique, and features that do not Granger-cause the target are zeroed-out.

In one embodiment it is preferred if the sparsity inducing penalty is chosen from the family of Group Lasso regularizations.

In another preferred embodiment the sparsity inducing penalty is chosen from the family of Group Order Weighted Lasso (GrOWL) regulations.

In addition, it is preferred if the sparsity inducing penalties are optimized using a sparsity inducing optimizer so as to generate a sparse model.

Here, it is preferred if the sparse model is optimized using a semi-stochastic Proximal Gradient Descent, SPGD, algorithm.

In an alternative preferred embodiment, the sparse model is optimized using a Follow the Regularized Leader, FtRL, algorithm.

In the preferred aspect of the invention, it is generally preferred if a causation vector is computed for each trained virtual sensor (sub-model), and wherein the causation vectors are concatenated to generate a causation matrix.

In this case, it is preferred if computing the causation vectors for the respective sub-models includes:

- converting a weight matrix of the first layer of the virtual sensor to an affinity matrix,
- clustering the affinity matrix to group similar features together,
- ranking the clusters by importance,
- ranking the features in each cluster by importance,
- computing a global ranking of features by considering the ranks of the clusters and the ranks of the features,
- using the global ranking as a causation vector.

Here, it is advantageous if ranking the clusters by importance is done by a permutation test method.

In an alternative embodiment, ranking the clusters by importance is done by a Zero-out method.

It will be understood that the features of the invention mentioned above and those yet to be explained below can be used not only in the respective combination indicated, but also in other combinations or in isolation, without leaving the scope of the present invention.

Exemplary embodiments of the invention are explained in more detail in the following description and are represented in the drawings, in which is:

Fig. 1 a schematic view of a motor vehicle having a sensor configuration;

Fig. 2 the outputs of several sensors of the sensor configuration of Fig. 1 over a certain period of time;

Fig. 3 a schematical view of a sensor configuration process;

Fig. 4 an example of a causation matrix;

Fig. 5 an example of a directed cyclic graph based on the causation matrix of Fig. 4;

Fig. 6 an example of a directed acyclic graph based on the directed cyclic graph of Fig. 5;

Fig. 7 another example of a causation matrix;

Fig. 8 another example of a directed cyclic graph on the basis of the causation matrix of Fig. 7;

Fig. 9 another example of a directed acyclic graph on the basis of the directed cyclic graph of Fig. 8;

Fig. 10 a schematic view of a Boltzmann machine;

Fig. 11 a schematic view of a restricted Boltzmann machine;

Fig. 12 another example of a restricted Boltzmann machine for the sensors of a drive train of a vehicle;

Fig. 13 actual speed values of the drive train of the RBM of Fig. 12 for three lags;

Fig. 14 a restricted Boltzmann machine based on the restricted Boltzmann machine in Fig. 12, wherein two sensors are identified to be replaceable;

Fig. 15 another example of two outputs of two real sensors of the RBM of Fig. 14;

Fig. 16 a flow chart of a method for determining a sensor configuration according to a preferred aspect of the invention;

Fig. 17 an embodiment of a virtual sensor (sub-model) architecture of the method of Fig. 16;

Fig. 18 another embodiment of a virtual sensor (sub-model) architecture of method of Fig. 16; and

Fig. 19 a causation analysis concept according to the method of Fig. 16.

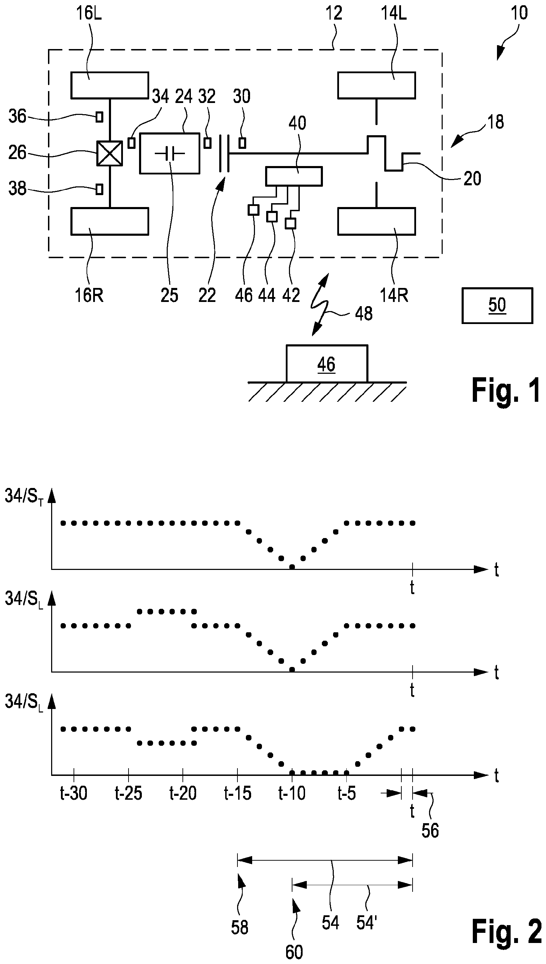

In Fig. 1, there is shown a vehicle 10 which may for example be a motor vehicle like a passenger car. The vehicle 10 has a body 12, front wheels 14L, 14R and rear wheels 16L, 16R.

The rear wheels 16L, 16R are driven wheels driven by a drive train 18.

The drive train 18 includes an internal combustion engine 20 and a transmission arrangement 24. The internal combustion engine 20 and the transmission arrangement 24 are preferably connected via a clutch arrangement 22, for example a starting clutch.

Typically, the transmission arrangement 24 includes multiple shiftable gear stages 25 for establishing a number of gear stages.

An output of the transmission arrangement 24 is connected to a differential 26 which is adapted to distribute drive power to the driven rear wheels 16L, 16R.

The vehicle 10 includes a number of sensors, for example an engine speed sensor 30 for detecting the rotary speed Seng of the internal combustion engine 20.

Further, the transmission arrangement 24 includes a first transmission speed sensor 32 which detects the speed of an input shaft of the transmission arrangement. Further, the transmission arrangement 24 includes a second transmission speed sensor 34 which detects a second transmission speed, for example the rotary speed ST, Strn of an output shaft of the transmission arrangement 24.

In addition, the drive train 18 may include a left driven wheel sensor 36 for measuring a rotary speed SL, Swl of the left driven rear wheel 16L, as well as a right driven wheel sensor 38 for detecting a rotary speed SR, Swr of the right driven wheel 16R.

The sensors 30 to 38 are connected to a controller 40, which can be drive train controller 18. The controller 40 may be a multi-system controller, comprising for example a transmission controller, an internal combustion engine controller, etc.

Further, the vehicle 10 may include further sensors, for example an engine torque sensor 42 for detecting a torque provided by the internal combustion engine 20. Further sensors may include a clutch position sensor 44 for detecting a clutch position of the clutch arrangement 22, as well as one or more temperature sensors 46, for measuring for example the temperature of fluid in the transmission 24.

The vehicle 10 may include a large number of further sensors, which measure for example the rotary speed of electric motors for adjusting an inclination of a vehicle seat, a temperature sensor for measuring the temperature in a vehicle compartment, radar sensors for measuring distances (for example LIDAR), camera sensors for detecting the surrounding of the vehicle, acceleration sensors for detecting roll movement, pitch movements and/or yaw movements. In addition, a number of electrical sensors for measuring electrical voltage, electrical currents etc. may be provided.

At least some of the sensors, preferably each of the sensors are connected to a controller of the vehicle, which might include the drive train controller 40 mentioned above.

In addition, any controller (for example controller 40) may be connected via a wireless communication 48 to a network 46 outside of the vehicle 10, for example the Internet, a GPS network, a cellular telephone network, a wireless local area (WLAN, Wifi) network, etc.

Fig. 1 also shows an evaluation computer 50.

The evaluation computer 50 is connected to at least one the controllers of the vehicle, for example the controller 40 and is adapted to conduct a method for determining a sensor configuration in the vehicle 10, which includes the plurality of sensors, including the steps of determining a preliminary sensor configuration for the vehicle, which preliminary sensor configuration includes a first number of real sensors, each of which outputting a real sensor signal, and the step of determining, whether at least one of the real sensors can be replaced by a virtual sensor, and comprising the step of changing the preliminary sensor configuration into a final sensor configuration which includes a second number of real sensors and at least one virtual sensor, wherein the second number is smaller than the first number.

The method may be conducted in accordance with a number of different embodiments, some of which being explained below. The below embodiments mainly relate to a sensor configuration for the drive train 18. However, the embodiments that are presently applied to the drive train 18, may be applied to other parts of the vehicle 10 as well, for example to a navigational system configuration, to a temperature control configuration, etc.

Fig. 2 shows three diagrams of outputs of several sensors of the sensor configuration of Fig. 1 over a certain period of time. Particularly, a first diagram shows the second transmission speed ST over the time, measured by sensor 34; the second diagram shows the left driven wheel speed SL measured by the sensor 36; and the third diagram shows the right driven wheel speed SR measured by the sensor 38.

In the diagrams, one assumes that the present time is t. Further, it is assumed that each of the sensors have a similar sampling frequency, corresponding to an identical sampling period, although this is not necessary.

Fig. 2 shows a window 54 corresponding to a number of sampling time periods. In Fig. 2, one sampling time period has been indicated to be a single lag 56. The window 54 typically consists of a number of single lags 56. The window 54 shown in Fig. 2 corresponds to a maximum lag 58. The maximum lag 58 corresponds to the maximum number of single lags 56 that is used for the process of determining whether at least one of the real sensors can be replaced by a virtual sensor.

In many cases, there will be a so-called best lag 60, which corresponds typically to a number of single lags 56 and is smaller than the maximum lag 58. The best lag 60 corresponds to a window 54'. At present, the best lag 60 corresponds to eight single lags, i.e. to a time period from t to t-8.

The best lag can be determined by one or more of the following:

- using statistical and information criterion such as Akaike or Bayesian information criterion (AIC, BIC);

- the first minimum in the mutual information between the time series and a shifted version of itself; and

- trial and error.

In the diagrams of Fig. 2 one can see that ST is almost constant from the beginning to t-15.

In a period from t-25 to t-20, SL deviates from ST and is larger than ST. Similarly SR is smaller than ST during the time period t-25 to t-20.

At t-15, the transmission output speed ST starts to decrease to zero. The output transmission speed of zero is achieved at t-10.

At this point, the vehicle is at a stop. Correspondingly, SL and SR are also zero.

If the driver wishes to start the vehicle again, he might experience on a $\mu$-split road a situation, where for example the right driven speed SR maintains zero for a few samples, while the other driven wheel speed SL increases.

The right driven wheel speed SR maintains at zero from t-10 to t-5 and then takes up speed again, for example due to a braking effect that a anti-slip control imparts onto the right driven wheel.

At t, the speeds ST, SL and SR are identical again.

From Fig. 2, one can see that the driven wheel speeds SL, SR have a certain relation to the output transmission speed ST. During some time windows they are identical. At other times, they may deviate quite drastically from the output transmission speed ST.

Nevertheless, one can say that the driven wheel speeds SL, SR are causing the output transmission speed ST, at least for certain situations, and preferably for most of the time.

The question arises whether any of these three sensors, which are real sensors in the example of Fig. 1, could be replaced by a virtual sensor that receives at least one real sensor signal from a real sensor and outputs a virtual sensor signal that emulates the real sensor signal of the replaced real sensor.

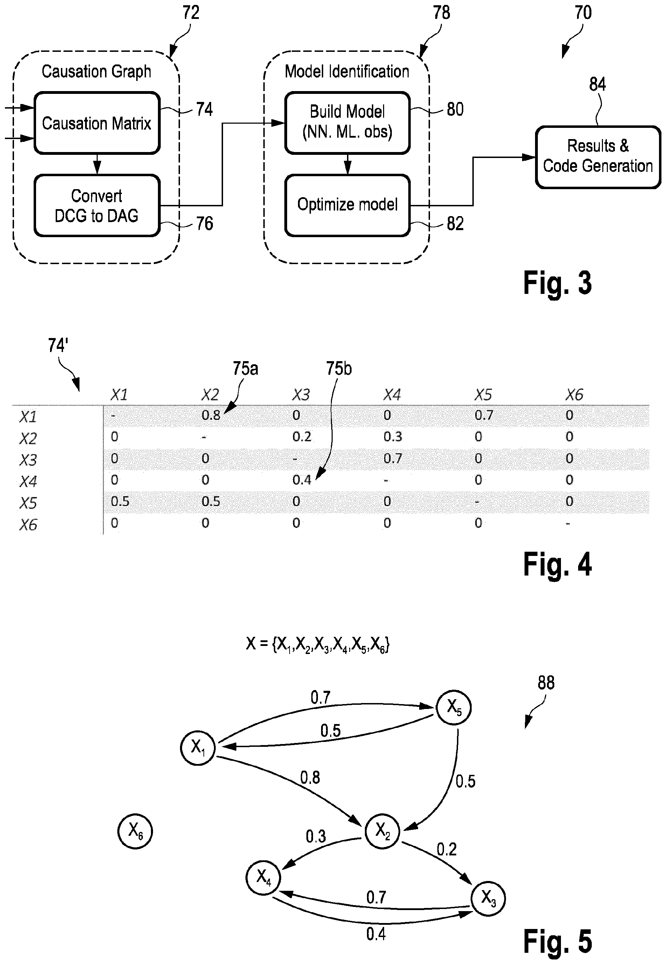

Fig. 3 is a schematical view of a sensor configuration process.

The sensor configuration process includes the use of a so-called causation stage 72, into which are input real sensor signals and optionally other parameters. The causation stage 72 includes a causation matrix 74 that is established on the basis of the real sensor signals, which are looked at for a certain lag, ideally the best lag.

The causation matrix 74 is based on the causations between the recorded outputs of the real sensors, which are determined for at least a subset of the samples (e.g. a best lag), and wherein the causations determined for the subset of samples are subjected to a post processing in order to determine a final causation set or matrix between the recorded outputs of the real sensors.

In other words, the causation matrix is one representation of the result of a causation analysis which determines causations between the recorded outputs of the real sensors.

The causation matrix 74 is used to establish a directed cyclic graph (DCG).

In box 76 of the causation stage 72, a conversion process is conducted, in order to convert the DCG into a directed acyclic graph (DAG), wherein either the real sensor with the highest or the one with the lowest causation is taken as a root for the directed acyclic graph.

In the directed acyclic graph (DAG), at least one real sensor which forms a leaf or a root of the graph, respectively, is determined to be replaceable.

In other words, the causation stage 72 determines which of the real sensors can be replaced by a virtual sensor.

The output of the causation stage 72 is entered into a modeling stage 78, which is used for modeling a virtual sensor that shall replace a real sensor. The modeling stage 78 includes a model building process 80 in which a model of the virtual sensor is built. Further, the modeling stage 78 includes a model optimization process 82 in which the model of process 80 is optimized.

Finally, the virtual sensor is included in the final sensor configuration, which is shown at 84, on the basis of which code is generated for implementing the virtual sensor.

Fig. 4 is one example of a causation matrix 74', which shows examples of causation between six sensors X1 to X6.

In line one, sensor X1 is shown to cause sensor X2 at a factor of 0,8 (causation 75a), and sensor X5 at a factor of 0,7, while X1 does not cause any of the sensors X3, X4, X6 at all.

The causation is typically a value between 0 and 1, wherein 0 means that a sensor does not cause another sensor at all. On the other hand, a "1" means that a sensor fully causes another sensor, so that the other sensor is redundant or even superfluous. In any case the other sensor can be replaced by the first sensor.

Another example is for instance that sensor X4 causes sensor X3 at a value of 0,4 (causation 75b), while sensor X3 causes X4 at a value of 0,7. These two sensors X3, X4 do not cause any of the other sensors.

In Fig. 4, the sensor configuration X is shown to be X = $\{X_1, X_2, X_3, X_4, X_5, X_6\}$.

Fig. 5 shows a directed cyclic graph that is established on the basis of the determined causations in the causation matrix 74'. The directed cyclic graph 88 of Fig. 5 shows that X1 causes X2 and X5. Further, it is shown that only X5 causes X1, while X5 also causes X2. Fig. 5 also shows that X6 does not cause any other sensor and is not caused by any other sensor, as can be taken from the last line and last column of the causation matrix 74' of Fig. 4.

In the directed cyclic graph (DCG), the weight in the directed edges explains "how much the respective sensor causes/correlates the other sensor". One can detect the cycles in a graph using a depth-first search (DFS) algorithm. In order to identify the dependency order of the sensors, the DCG must be transformed into a directed acyclic graph (DAG).

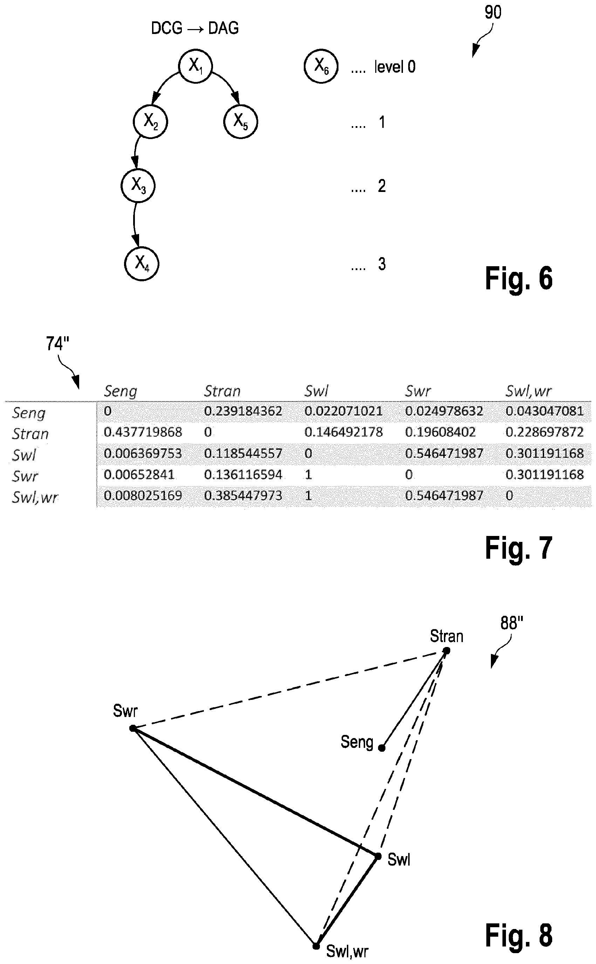

The directed cyclic graph DCG 88 of Fig. 5 can be converted into a directed acyclic graph (DAG) as shown at 90 in Fig. 6. There are many algorithms that can convert a DCG to a DAG.

The DAG 90 is Fig. 6 shows that X1 has been taken as a root for the DAG, which sensor X1 causes X2 and X5

On the other hand, X2 causes X3, and X3 causes X4. Fig. 6 shows that the DAG has four levels wherein level 0 corresponds to the root, and level 3 corresponds to a leaf of the DAG.

The graph or tree in Fig. 6 is a four-level tree. It is to be noted that X4 is a son of X3 and not X2 because X3 has a higher causation. From the DAG, one can start replacing sensors by removing the leaves at the node of the tree. Each sensor at the leaves will go through a model identification pipeline where the target value is the sensor signal that one wishes to reconstruct, and the inputs are the corresponding parents in the tree. Further, one can remove more levels, but it should be born in mind that the more levels are removed, the less accurate the reconstruction will be.

In the DAG of Fig. 6, it is quite clear that X4 might be replaced by a virtual sensor.

The above example illustrates a simple sensor space or configuration, wherein the DAG tree is built based on the understanding that all sensors in the configuration are generally replaceable, and then remove the least dependent sensors. However, in a dynamic system like a car, there are many sensors that are redundant for safety reasons, and should be neither removed nor replaced. Therefore, it is important for the algorithm to distinguish these important unreplaceable sensors in the configuration/space. Therefore, for example, one can either associate with each sensor a flag variable that indicates whether it is replaceable or not, or reflect the irreplaceability with a high penalty factor f. Then, the algorithm that converts DCG to DAG may put the irreplaceability into consideration when building the tree. For example, in the former approach (the flag), the algorithm assigns the sensor Xi that has a flag value "irreplaceable" and is the most dependent sensor as a root and builds the tree from there or can be excluded from the procedure.

In some cases, a combination of two or more sensors (any time signal operation such as some summation, differencing or dynamic scaling) can cause another sensor. If the caused sensor is worth to be replaced, then one merges the sensor into a new hybrid sensor, which will be added to the sensor configuration. A simple example can be seen when reconstructing the output speed of a transmission: the speed of left or rear wheel alone does not cause the transmission output speed during cornering, due to the differential. However, the mean or average value of both wheel speeds causes directly and can be used to infer the transmission output speed ST. When two or more sensors are combined, then all involved sensors in the combination should be flagged with "irreplaceable".

Fig. 7 shows another example of a causation matrix 74" for rotary speeds Seng, measured by for example sensor 30, Stran, measured for example by sensor 32, Swl, measured for example by sensor 36, Swr, measured for example by sensor 38, and Swl, wr which corresponds to the sum of sensor 36 and sensor 38.

From the above analysis, one knows that a combination of both wheel speed Swr, Swl causes directly the speed ST (Swl, wr) of the transmission. Therefore, one can create a new linearly combined sensor Swl, wr, add it to the sensor space and toggle the reproducible flag for Swl and Swr. This has been done in the causation matrix of Fig. 7.

When one assumes that a causation graph is built with a maximum lag of 50, the values in the causation matrix might differ on the basis of the lag value (in the example above, the values are assumed based on domain knowledge and are not actually computed).

The causation matrix 74" of Fig. 7 can for example be computed using the Granger causality with a maximum lag of 83. The maximum lag can be computed by "Schwert", and the best lag can be chosen using an Akaike information criterion (AIC), alternatively on the basis of a Bayesian information criterion (BIC).

Fig. 8 shows an example of a directed cyclic graph 88" which is established on the basis of the causation matrix 74" of Fig. 7.

The DCG 88" of Fig. 8 shows that the respective sensors cause each other depending on the thickness of the respective lines and the length of the paths from the root.

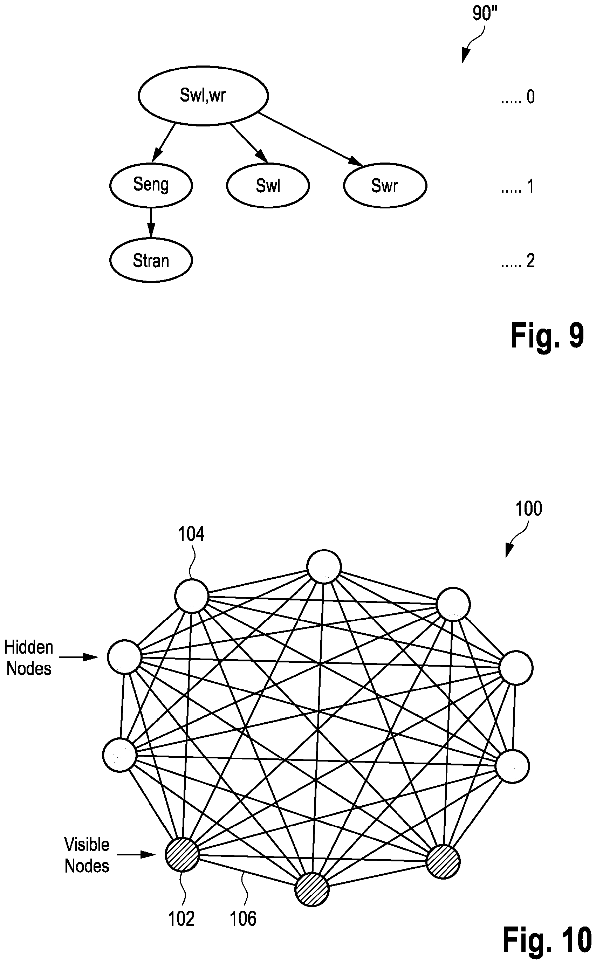

Fig. 9 shows a directed acyclic graph 90" which has been converted from the DCG 88" of Fig. 8.

It can be seen that the speed Swl, wr corresponding to the output transmission speed ST has been taken as a root, which real sensor signal causes Seng, Swl, and Swr.

Further, Seng causes Stran to some extent (corresponding ST).

In view of the above, it can be seen that Stran forms the leaf of the directed acyclic graph 90" and thus indicates that the corresponding real sensor 32 might be replaced by a virtual sensor.

Fig. 9 shows the most appropriate tree that can be generated from the DCG 88" of Fig. 8, considering the causation values and the flag as mentioned above.

In Fig. 9, the sensors in level 0 and in level 1 cannot be replaced. Therefore, only the output transmission speed sensor Stran can be replaced using the combination of the driven rear wheel speeds and the speed of the engines as features to the model used in the modeling stage 78.

In the modelling stage 78, the causation branches of the DAG are taken as features to train the model. As an advantageous way to identify a model able to replace the given sensor (i.e. turn the real sensor into a virtual sensor), any statistical or deterministic algorithm that can learn the representation of signals can be used to build the model that will be used to reconstruct the sensor. For example, neural network architecture called Time Delayed Neural Network (TDNN) can be used. This is a type of feed forward neural network that are suitable for time series. This general architecture can be used for all pruned leaves. However, the hyperparameters of the model should be optimized using an optimization algorithm (in 82), to help the general algorithm architecture be specific for the given problem, such as, Grid Search, Random Search or Bayesian hyperparameter optimization. For the example of TDNN, the following hyperparameters can be optimized: number of neurons, number of layers, drop-out rate, etc.

Once the model is trained and evaluated against a test set, the final sensor configuration of the process 70 will extract the weights and the parameters of the model and calculate the prediction of the model through feed forward calculation.

In Figs. 10 to 15, another approach to replace sensors of a preliminary sensor configuration is shown. The approach shown in Figs. 10 to 15 is a brute force approach by using a Boltzmann Machine (BM). This BM is an undirected generative stochastic neural network that can learn the probability distribution over its set of inputs. It is always capable of generating different states of a system.

The Boltzmann machine, which is shown for example in Fig. 10 at 100, is able to represent any system with many states given infinite training data. In the present case, the above sensor configuration is to be represented.

Fig. 10 illustrates the architecture of the BM. Visible nodes 102 are features/inputs to the system, which in our case are all sensors in the vehicle. On the other hand, hidden nodes 104 are nodes to be trained that will identify and exploit the combination of the visible nodes. Essentially, the BM tries to learn how the nodes are influencing each other by estimating the weights in their edges (edges resemble the conditional probability distributions).

The Boltzmann Machine and its variations train the model using a Contrastive Divergence algorithm. In a nutshell, the training works as follows:

1. randomly initialize the weights between the nodes;

2. feed a sample input vector to the visible nodes;

3: compute the hidden nodes based on the weights and a global bias (feed forward approach);

4. reconstruct the visible nodes from the hidden nodes;

5. compare the visible nodes versus the reconstructed visible nodes, using for example a Kullback divergence;

6. update the weights based for example on the Kullback divergence loss function using a gradient descent; and

7. repeat steps 2 to 6 for all feature samples until convergence.

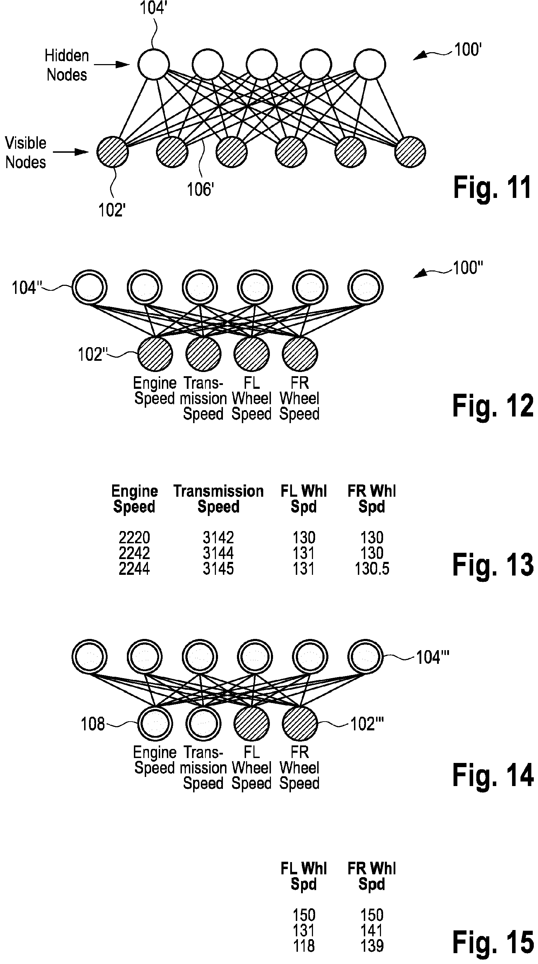

While in theory the Boltzmann Machine of Fig. 10 is a great model and can solve many problems, it is in practice very difficult to implement due to the necessary computation power that is needed.
Therefore, one can use a variant of the Boltzmann machine called Restricted Boltzmann Machine (RBM), where nodes from the same type do not connect to each other, as is shown in Fig. 11 at 100'.
Here the visible nodes 100" connect to the hidden nodes 104' by edges 106', but neither the visible nodes 100" connect to each other, nor do the hidden nodes 104'.
In the above example for different speeds, namely the engine speed, Seng, the transmission speed Stran, the speed Swl of the left driven wheel, and the speed Swr of the right driven wheel, a Restricted Boltzmann Machine (RBM) can be established as shown 100" in Fig. 12.
Here, the visible nodes 100" correspond to the above-mentioned four speeds. Further, a number of hidden nodes is established, wherein the number of hidden nodes is preferably larger than the number of hidden nodes.
During training, a model requires a big data set of all sensors as shown in Fig. 12, as discussed before. For each sample, the model will update the weights using the Contrastive Divergence algorithm with back propagation through time. Here, in Fig. 12, each of the nodes are using recurrent neurons.
Fig. 13 shows an example of the speed set corresponding to Fig. 12.
After training the model, one can provide the information of the physical sensors (real sensors), that one does not wish to replace. These sensors help to identify the current state of the system, and compute the values of the missing sensors as is shown in Fig. 14.
Here, the engine speed and the transmission speed are measured by real sensors, and the speeds FL (corresponding to Swl) and FR (corresponding to Swr) are computed by the RBM as shown in Fig. 15.
The advantage of this brute force algorithm is that, once the model is trained, one can at any time remove or add a sensor without the need to re-train or reconfigure the model. This is quite useful if a physical sensor fails, because then the model will keep working sufficiently.
As mentioned above, in theory, a BM would probably be the best concept to represent a system, particularly a recurrent version of it. However, it is difficult to be implemented due to lack of computation power. Nevertheless, this might be easier in the future.
There are further variations of a Boltzmann Machine, such as a Deep Boltzmann Machine. But the intuition is the same. The only difference is that it will require more effort and resources to compute in an attempt to generalize better to the given problem.
The Boltzmann machine is inspired by the Markov Chain Monte Carlo (MCMC) algorithm. More specifically, the training algorithm, Contrastive Divergence, is based on Gibbs Sampling that is used in MCMC for obtaining sequence of observations which are approximated from a specified multi-variant probability distribution.
With a Boltzman Machine approach, the trained model for a vehicle is only applicable to this vehicle. There is no guarantee that it is applicable to other vehicles, even from the same series.
Even if BM sounds tempting, one might still prefer the above graph networks approach of Figs. 4 to 9, because BM is more theoretical and hard to implement and compute.
In the above description, several terms have been used, which will be defined as follows:
A lag refers to a passed point of a time signal.
A maximum lag is the maximum point in the past that one can look to.
Best lag. This is some time point in the past that happens between observed time and maximum lag. It is the best lag because the sliding window from observed time until this lag time is producing the best causality value, which in turn will be potentially the best to model the needed observed value.
Sliding window. It is a way to reconstruct a time series into windows with size of lag. Then the window is shifted by a step. For example, this is the following time series:

| A signal | 78 | 74 | 22 | 17 | 82 | 10 | 23 |
|---|---|---|---|---|---|---|---|
| Time | T-6 | T-5 | T-4 | T-3 | T-2 | T-1 | T |

When a lag of 3 is chosen and a step of 1, the sliding window would be:

| Window 1 | 23 | 10 | 82 |
|---|---|---|---|
| Window 2 | 10 | 82 | 17 |
| Window 3 | 82 | 17 | 22 |
| Window 4 | 17 | 22 | 74 |
| Window 5 | 22 | 74 | 78 |

The term "feature" is a terminology from machine learning. These are the inputs to an algorithm to train and be fit to predict the output (label or target). In other words, features are the input variables used in making predictions.

A label is also a term used in machine learning terminology. It is the output of the algorithm. Moreover, it is the prediction that a fit model will produce given the features (inputs).

Hyperparameters are also used in machine learning. These are parameters whose values are set before the learning process begins. For example, the number of neurons in a hidden layer in a neuron network is a hyperparameter. Another example is the number of decision trees in a Random forest.

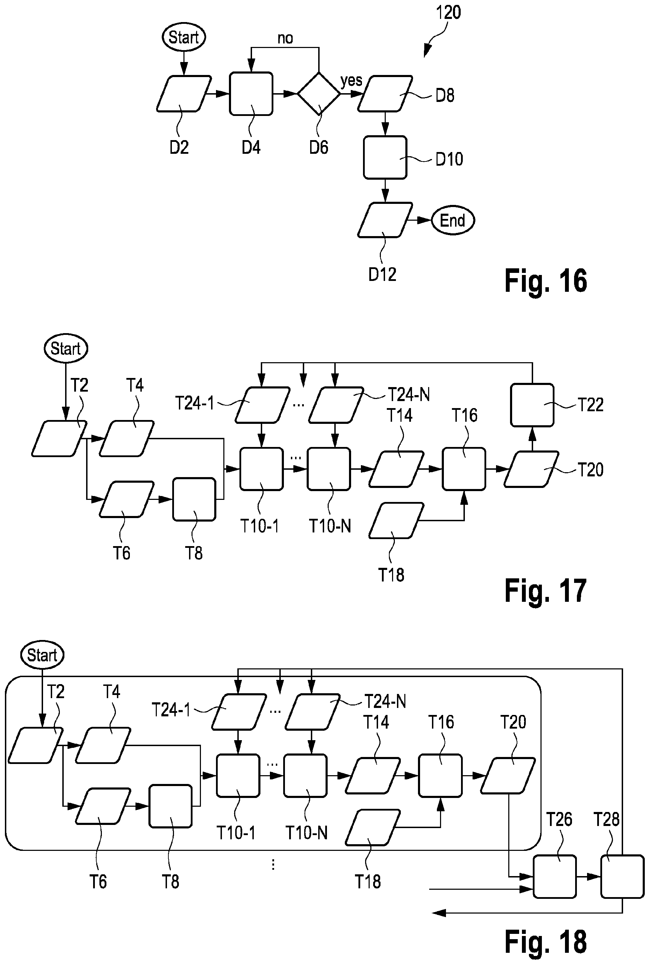

In Fig. 16 to Fig. 19, another embodiment for determining a sensor configuration is shown, which is based on a Granger Neural Causality.

Fig. 16 is a flow chart of a method 120 for determining a sensor configuration.

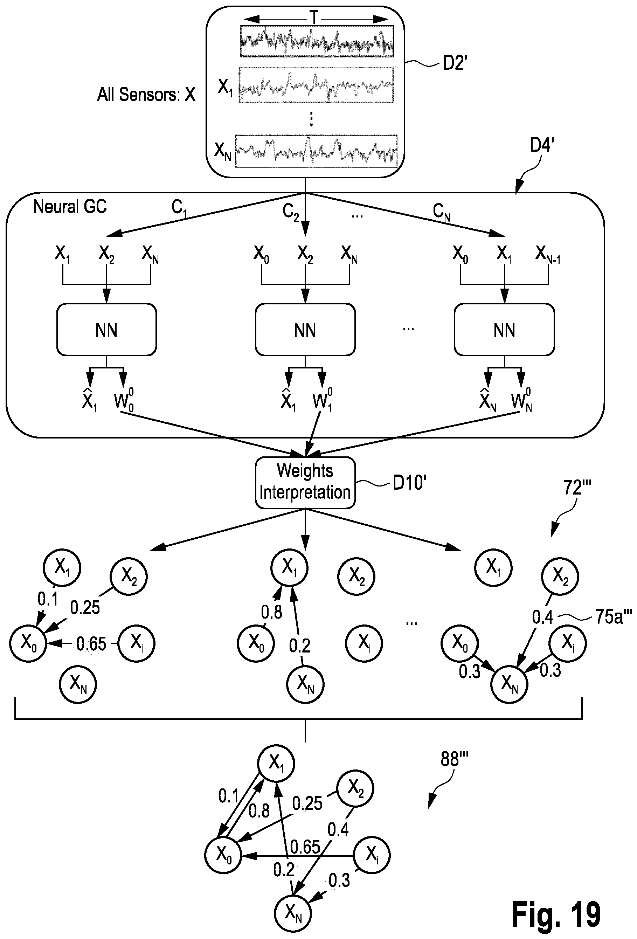

The method 120 includes a first step D2 which is conducted after a start of the method. In step D2 in Fig. 16 or in D2' in Fig. 19, the outputs of at least a subset of a number of real sensors of a vehicle are detected and recorded. Preferably, the outputs of each of the real sensors of the vehicle are detected and recorded.

The recorded outputs of the real sensors are sampled time series of the real sensor data.

The recorded outputs of the real sensors ($X_0$, $X_1$, ... $X_N$ in Fig. 19) are input into a Neural Granger Causality (in the following briefly referred to as "Neural GC") D4 (or D4' in Fig. 19). The Neural GC is implemented as a component-wise neural network, wherein each real sensor corresponds to one of the components of the Neural GC, and wherein each component is formed by a virtual sensor sub-model (which itself is a neural network, as shown at NN in Fig. 19) which is trained so as to emulate a respective real sensor, using the outputs of at least some of the other real sensors of the subset of real sensors (preferably the outputs of each of the other real sensors). In addition, past outputs of the real sensor which is to be emulated (the so-called target) may be used for training the corresponding virtual sensor.

The sub-models of the Neural GC are shown at $C_1$, $C_2$, ..., $C_N$ in Fig. 19. In this case, each sub-model receives and uses the outputs of each of the other real sensors. For example $C_2$ receives the recorded outputs $X_0$, $X_2$, ... $X_N$.

The Neural GC is trained. Particularly, each of the virtual sensors (sub-models) of the Neural GC are trained. The virtual sensors can be trained individually or together, as is described later.

The Neural GC is a non-sequential neural network that branches into several internal neural networks (sub-models). Each of those sub-models can be trained individually to predict a sensor (real sensor), given all the other sensors as an input (the recorded outputs of the other real sensors excluding the one which is to be predicted by that particular sub-model). In an alternative approach, each of the sub-models are trained together by adding up their losses and back propagating them to optimize the weights of the sub-models.

In other words, the Neural GC is a component-wise model wherein each component can be viewed as an independent neural network which is denoted sub-model or virtual sensor (or component).

The training of the Neural GC is shown at D6 in which the question arises whether the Neural GC is fit. If not, the training has to be resumed (word "no" in Fig. 16). If the Neural GC is fit and is held to include at least one virtual sensor which emulates a respective real sensor, the method 120 of Fig. 16 goes to step D8 in which the weights of the first layers of each of the sub-models are extracted (the first hidden layers). In Fig. 19, for example, $X\hat{}_i$ are the (predicted) outputs of the virtual sensors (sub-models NN), and $W_i$ are the respective extracted weights.

In a subsequent step D10 in Fig. 16 (or D10' in Fig. 19), the extracted weights $W_i$ are interpreted so as to extract relevant causations (similar as the causations described above in the earlier embodiments). In Fig. 19, this causation stage is shown at 72'''. Here, for example, the causations of sub-model $C_N$ include that $X_2$ causes $X_N$ with a value of 0.4 (shown at 75a'''). The causations can be used to generate the causation matrix as is shown for example in Fig. 4 or 7 of the above embodiments. Here, the causation vector for each sub-model is to be computed. The causation vectors are, subsequently, concatenated, to generate the causation matrix.

As described earlier, the causation matrix can then be converted into a directed cyclic graph (DCG), as is for example shown at 88''' in Fig. 19. As in the earlier embodiments, the DCG may then be converted into a directed acyclic graph (DAG), as is shown for example above in Fig. 6 or Fig. 9.

Subsequently, at least one real sensor which forms a leaf or a root of the DAG may be determined to be replaceable and preferably be replaced by a virtual sensor in the final sensor configuration of the vehicle.

In Fig. 16, these last steps are preferably included in step D12 which is the final step before the method 120 of Fig. 16 ends.

As described above, step D6 determines whether the Neural GC is fit. The Neural GC is fit if all of its sub-models (virtual sensors) are fit. The definition of "fit" is provided below.

As mentioned before, all sub-models have preferably the same architecture, which is essentially shown in the flow chart of Fig. 17. Fig. 17 also shows on how the respective sub-model is trained.

In step T2, the sub-model receives as inputs the outputs of each of the real sensors (in one embodiment except the one which corresponds to the sub-model that is actually trained).

In step T4 and T6, the inputs are split into continuous time series (T4) and categorical time series (T6). Categorical time series are time series in which the values at each time point are categories rather than measurements, wherein a sampled value of a categorical time series may for example be an integer value. A categorical time series is for example the output of an ignition key sensor (ignition on or ignition off), or a gear number sensor.

The categorical time series are transformed into their respective embedding layers (shown at T8), before they are concatenated with the continuous time series T4 and fed to the first hidden layer. The layers of the sub-model neural network are shown at T10-1 to T10-N. The first layer T10-1 is a first hidden layer. All subsequent layers are preferably 1D Convolutional layers. Such 1D Convolutional layers work well with time series. However, the layers may as well be Recurrent or Dense layers.

For the first hidden layer T10-1, it is preferred if a Group Lasso or a Group Order Weighted Lasso (GrOWL) regularization penalty is used to group the similar features together using a parameter tying technique, and to zero-out those features that do not Granger-cause the target with the help of PGD (Proximal Gradient Descent), or another sparse inducing optimizer.

In other words, weights of the respective layers are established, as shown at T24-1 to T24-N, using sparsity inducing penalty only for the weights T24-1 of the first hidden layer T10-1..

The layers T10-1 to T10-N lead to a prediction of the output of the real sensor which is to be emulated. This is shown at T14.

T18 is an input of the true values (the output of the real sensor) which is to be predicted/emulated.

In T16, a loss function is computed. In other words, the loss between the predicted and the true value is computed. The losses are shown at T20 in Fig. 17.

The losses T20 are used to optimize the weights T24-1 to T24-N based on using a sparse inducing optimizer, as shown at T22 in Fig. 17.

The sparse inducing optimizer may be PGD, semi-stochastic PGD (SPGD), or FtRL ("Follow the Regularized Leader").

The proximal operator in the sparse inducing optimizer needs to be optimized to work with the regularized penalty. A sub-model is fit if one of the following conditions is met:

- early stopping when the loss is not decreasing after K iterations;

- the targeted sparsity percentage in the weights of the first hidden layer is reached; the desired sparsity percentage is a hyperparameter of the sub-model neural network.

Again, each of the sub-models, as shown in Fig. 17, may be trained individually.

On the other hand, the sub-models may be trained together, as shown in Fig. 18.

In this case, the losses T20 will be accumulated, as shown in T26, wherein the accumulated losses are used to optimize the weights using a sparse inducing optimizer at T28. The output of the sparse inducing optimizer (T28) is in this case back propagated to each of the other sub-models and their respective weights, and not only to the weights T24-1 to T24-N of the present sub-model.

If all the sub-modules of the Neural GC are fit, the Neural GC is fit.

Once the Neural GC is fit, the weights of the respective first layers of each sub-model should be sparse (wherein features with assigned zeros do not Granger-cause the target (prediction) of that sub-model).

To generate the causation matrix as shown in Fig. 4 and Fig. 7, it is preferred if causation vectors for each sub-model are computed and then concatenated to generate the causation matrix.

The transformation is made as follows:

1. The first layer weight matrix is converted into an Affinity Matrix.

2. The Affinity Matrix is Clustered, to group the similar features together.

3. The Clusters are ranked by their importance, preferably in a descending manner.

4. The features in each Cluster are ranked by their importance, preferably in a descending manner.

5. A global ranking of features is computed, considering the rankings of the Clusters and the rankings of the features.

6. The global ranking is then considered normalized and used as causality vector that causes the target (the prediction of the sub-model).

In the first step, the weight matrix is converted to the Affinity Matrix (similarity matrix) using a pairwise similarity metric like cosine similarity. Subsequently, the features are clustered using the generated Affinity Matrix with any clustering algorithm that works with an Affinity Matrix like an Affinity Propagation algorithm. In step 3, the clusters are ranked by importance using feature importance measures like Permutation Test or Zero-out Test. In the Permutation Test, for example, the original data-set (recorded output data of the other real sensors), i.e. the data-set the respective-model is trained on, is randomly shuffled, and fed again to predict. The cluster that yields higher losses means that it has a higher importance than the rest. Similarly, each of the features are ranked.

In step 5, for example, the absolute global ranking $F^{importance}_{j}$ of a feature j found in a cluster Pi may be computed by the following equation (other equations may be used as well):

$$F^{importance}_{j} = \frac{e_{P_i}}{e_{P_i}/m_j} \times \frac{e_j}{e_{orig}}$$

where:

- $e_{p_i}$: is the error after permutating cluster Pi.
- $e_{p_i}/m_j$: is the error after permutating cluster Pi without permutating the feature j.
- $e_j$: is the error after permutating feature j.
- $e_{orig}$: is the original error without any permutation.

Finally, in step 6, the ranking is normalized so that all rankings add up to 1.

On the basis of these causation or causality vectors, the causation matrix can be generated by concatenating them. On the basis of the causation matrix, a directed cyclic graph (as DCG 88‴ in Fig. 19) can be built and converted into a directed acyclic graph (as shown in for example Fig. 7 and 8).

Reference numerals list:

| | |
|---|---|
| 10 | vehicle |
| 12 | body |
| 14L,14R | front wheels |
| 16L,16R | right wheels |
| 18 | drive train |
| 20 | internal combustion engine |
| 22 | clutch arrangement |
| 24 | transmission arrangement |
| 25 | shiftable gear stages |
| 26 | differential |
| 30 | engine speed sensor (Seng) |
| 32 | first transmission speed sensor |

| | |
|---|---|
| 34 | second transmission speed sensor (ST, Stran) |
| 36 | left driven wheel sensor (SL, Swl) |
| 38 | right driven wheel sensor (SR, Swr) |
| 40 | controller |
| 42 | engine torque sensor |
| 44 | clutch position sensor |
| 46 | temperature sensor |
| 46 | network unit |
| 48 | wireless communication |
| 50 | evaluation computer |
| 54 | window |
| 56 | lag |
| 58 | maximum lag |
| 60 | best lag |
| 70 | sensor configuration process |
| 72 | causation stage |
| 74 | causation matrix |
| 76 | conversion process |
| 78 | modelling stage |
| 80 | model building |
| 82 | model optimization |
| 84 | sensor configuration |
| 88 | directed cyclic graph |
| 90 | directed acyclic graph |
| 100 | Boltzmann machine |
| 102 | visible nodes |
| 104 | hidden nodes |
| 106 | edges |
| 108 | missing nodes (sensors) |
| 120 | method |

**Claims**

1. Method for determining a sensor configuration in a vehicle (10) which includes a plurality of sensors (42,44,46), comprising the steps of:

   - establishing a preliminary sensor configuration for the vehicle, which sensor configuration includes a first number of real sensors, each of which outputting a real sensor signal;
   - determining whether at least one of the real sensors can be replaced by a virtual sensor;
   - changing the preliminary sensor configuration into a final sensor configuration which includes a second number of real sensors and at least one virtual sensor which has been determined to replace at least one of the real sensors, wherein the second number is smaller than the first number,

   **characterized by**:

   wherein the determining step includes:

      - detecting and recording the outputs of at least a subset of the real sensors, and
      - conducting a causation analysis which determines causations between the recorded outputs of the subset of real sensors,

   wherein the causation analysis includes building a component-wise neural network, CWNN (D4'), where each real sensor of the subset of real sensors corresponds to one of the components of the CWNN, wherein each component is formed by a virtual sensor sub-model (NN) which is trained so as to emulate a respective real sensor, using the outputs of at least some of the other real sensors of the subset of real sensors.

2. Method of claim 1, wherein the training step includes applying sparsity inducing penalty to respective first hidden layers of at least some of the virtual sensors.

3. Method of claim 2, wherein the sparsity inducing penalty is chosen from the family of Group Lasso regularizations.

4. Method of claim 2, wherein the sparsity inducing penalties is chosen from the family of Group Order Weighted Lasso (GrOWL) regulations.

5. Method of any one of claims 2 to 4, wherein the sparsity inducing penalty is optimized using a sparsity inducing optimizer so as to generate a sparse model.

6. Method of claim 5, wherein the sparse model is optimized using a semi-stochastic Proximal Gradient Descent, SPDG, algorithm.

7. Method of claim 5, wherein the sparse model is optimized using a Follow the Regularized Leader, FtRL, algorithm.

8. Method of any one of claims 1 to 7, wherein a causation vector is computed for each trained sub-model, and wherein the causation vectors are concatenated to generate a causation matrix.

9. Method of claim 8, wherein computing the causation vectors for the respective sub-models includes:

   - converting a weight matrix of the first layer of the virtual sensor to an affinity matrix,
   - clustering the affinity matrix to group similar features together,
   - ranking the clusters by importance,
   - ranking the features in each cluster by importance,
   - computing a global ranking of features by considering the ranks of the clusters and the ranks of the features,
   - using the global ranking as a causation vector.

10. Method of claim 9, wherein ranking the clusters by importance is done by a permutation test method.

11. Method of claim 9, wherein ranking the clusters by importance is done by a Zero-out method

12. Method for determining a sensor configuration in a vehicle (10) which includes a plurality of sensors (42,44,46) comprising the steps of:

   - establishing a preliminary sensor configuration for the vehicle, which sensor configuration includes a first number of real sensors, each of which outputting a real sensor signal;
   - determining whether at least one of the real sensors can be replaced by a virtual sensor;
   - changing the preliminary sensor configuration into a final sensor configuration which includes a second number of real sensors and at least one virtual sensor, wherein the second number is smaller than the first number,

   **characterized by**:

   wherein the determining step includes:

   - recording the real sensor signals of at least a subset of the first number of real sensors, and
   - evaluating the recorded real sensor signals in order to determine whether at least a first one of the real sensors can be replaced by a first virtual sensor that receives at least one real sensor signal from a second real sensor and outputs a virtual sensor signal that emulates the real sensor signal of the first real sensor.

13. Method according to claim 12, wherein the evaluating step includes the use of a Boltzmann machine having a number of visible nodes, each visible node representing a real sensor, and having a number of hidden nodes, the hidden nodes being computed by exploiting combinations of nodes.

14. Method according to claim 13, wherein the Boltzmann machine is a Recurrent Temporal Restricted Boltzmann machine which is preferably implemented by a RNN-Gaussian dynamic Boltzmann machine.

15. Method according to claim 12, wherein the determining step includes:

- detecting and recording the outputs of at least a subset of the real sensors for a predetermined number of temporally subsequent sampling steps, and
- conducting a causation analysis which determines causations between the recorded outputs of the real sensors wherein the causations between the recorded outputs of the real sensors are determined for at least a subset of the samples and wherein the causations determined for the subset of samples are subjected a post-processing in order to determine a final causation set or matrix between the recorded outputs of the real sensors, and wherein a directed cyclic graph (DCG) is established on the basis of the determined causations, wherein the DCG is converted into a directed acyclic graph (DAG), wherein either the real sensor with the highest or the one with the lowest causation is taken as a root for the directed acyclic graph, and wherein at least one real sensor which forms a leaf or a root, respectively, in the DAG is determined to be replaceable.

**Patentansprüche**

1. Verfahren zur Bestimmung einer Sensorkonfiguration in einem Fahrzeug (10), das eine Vielzahl von Sensoren (42, 44, 46) enthält, mit den folgenden Schritten:

   - Erstellen einer vorläufigen Sensorkonfiguration für das Fahrzeug, wobei die Sensorkonfiguration eine erste Anzahl von realen Sensoren umfasst, von denen jeder ein reales Sensorsignal ausgibt;
   - Bestimmen, ob mindestens einer der realen Sensoren durch einen virtuellen Sensor ersetzt werden kann;
   - Ändern der vorläufigen Sensorkonfiguration in eine endgültige Sensorkonfiguration, die eine zweite Anzahl von realen Sensoren und mindestens einen virtuellen Sensor enthält, der bestimmt wurde, um mindestens einen der realen Sensoren zu ersetzen, wobei die zweite Anzahl kleiner als die erste Anzahl ist,

   **gekennzeichnet dadurch, dass**

   der Bestimmungsschritt umfasst:

   - Erfassen und Aufzeichnen der Ausgaben von mindestens einer Teilmenge der realen Sensoren, und
   - das Durchführen einer Kausalitätsanalyse, die Kausalitäten zwischen den aufgezeichneten Ausgaben der Teilmenge der realen Sensoren bestimmt,

   wobei die Kausalitätsanalyse den Aufbau eines komponentenweisen neuronalen Netzes, CWNN (D4'), umfasst, wobei jeder reale Sensor der Teilmenge der realen Sensoren einer der Komponenten des CWNN entspricht, wobei jede Komponente durch ein virtuelles Sensorteilmodell (NN) gebildet wird, das so trainiert wird, dass es einen entsprechenden realen Sensor emuliert, und zwar unter Verwendung der Ausgaben von wenigstens einigen der anderen realen Sensoren der Teilmenge von realen Sensoren.

2. Verfahren nach Anspruch 1, wobei der Trainingsschritt die Anwendung einer Sparsity-induzierenden Strafe auf die jeweiligen ersten versteckten Schichten von mindestens einigen der virtuellen Sensoren umfasst.

3. Verfahren nach Anspruch 2, wobei die Sparsity-induzierende Strafe aus der Familie der Group-Lasso-Regularisierungen ausgewählt wird.

4. Verfahren nach Anspruch 2, wobei die die Sparsity-induzierenden Strafen aus der Familie der Group-Order-Weighted-Lasso-(GrOWL)-Regularisierungen ausgewählt werden.

5. Verfahren nach einem der Ansprüche 2 bis 4, wobei die die Sparsity-induzierende Strafe unter Verwendung eines Sparsity-induzierenden Optimierers so optimiert wird, dass ein Sparse-Modell erzeugt wird.

6. Verfahren nach Anspruch 5, wobei das Sparse-Modell unter Verwendung eines semi-stochastischen Proximal-Gradient-Descent, SPDG, -Algorithmus optimiert wird.

7. Verfahren nach Anspruch 5, wobei das Sparse-Modell unter Verwendung eines Follow-the-Regularized-Leader, FtRL, -Algorithmus optimiert wird.

8. Verfahren nach einem der Ansprüche 1 bis 7, wobei für jedes trainierte Teilmodell ein Kausalitätsvektor berechnet wird, und wobei die Kausalitätsvektoren miteinander verknüpft werden, um eine Kausalitätsmatrix zu erzeugen.

9. Verfahren nach Anspruch 8, wobei das Berechnen der Kausalitätsvektoren für die jeweiligen Teilmodelle umfasst:

   - Umwandlung einer Gewichtsmatrix der ersten Schicht des virtuellen Sensors in eine Affinitätsmatrix,
   - Clustern der Affinitätsmatrix, um ähnliche Merkmale zusammenzufassen,
   - Rangfolgen-Bestimmen der Cluster nach Wichtigkeit,
   - Rangfolgen-Bestimmen der Merkmale in jedem Cluster nach Wichtigkeit,
   - Berechnen einer globalen Rangfolge von Merkmalen unter Berücksichtigung der Rangfolgen der Cluster und der Rangfolgen der Merkmale,
   - Verwendung der globalen Rangfolge als ein Kausalitätsvektor.

10. Verfahren nach Anspruch 9, wobei das Rangfolgen-Bestimmen der Cluster nach Wichtigkeit durch ein Permutationstestverfahren erfolgt.

11. Verfahren nach Anspruch 9, wobei das Rangfolgen-Bestimmen der Cluster nach Wichtigkeit durch eine Zero-Out-Methode durchgeführt wird.

12. Verfahren zum Bestimmen einer Sensorkonfiguration in einem Fahrzeug (10), das eine Vielzahl von Sensoren (42, 44, 46) enthält, umfassend die Schritte:

   - Erstellen einer vorläufigen Sensorkonfiguration für das Fahrzeug, wobei die Sensorkonfiguration eine erste Anzahl von realen Sensoren umfasst, von denen jeder ein reales Sensorsignal ausgibt;
   - Bestimmen, ob mindestens einer der realen Sensoren durch einen virtuellen Sensor ersetzt werden kann;
   - Ändern der vorläufigen Sensorkonfiguration in eine endgültige Sensorkonfiguration, die eine zweite Anzahl von realen Sensoren und mindestens einen virtuellen Sensor umfasst, wobei die zweite Anzahl kleiner ist als die erste Anzahl,

   **gekennzeichnet dadurch, dass**
   der Bestimmungsschritt umfasst:

   - Aufzeichnen der realen Sensorsignale von mindestens einer Teilmenge der ersten Anzahl von realen Sensoren, und
   - Auswerten der aufgezeichneten realen Sensorsignale, um zu bestimmen, ob mindestens ein erster der realen Sensoren durch einen ersten virtuellen Sensor ersetzt werden kann, der mindestens ein reales Sensorsignal von einem zweiten realen Sensor empfängt und ein virtuelles Sensorsignal ausgibt, das das reale Sensorsignal des ersten realen Sensors emuliert.

13. Verfahren nach Anspruch 12, wobei der Auswertungsschritt die Verwendung einer Boltzmann-Maschine mit einer Anzahl von sichtbaren Knoten, wobei jeder sichtbare Knoten einen realen Sensor darstellt, und mit einer Anzahl von verborgenen Knoten umfasst, wobei die verborgenen Knoten durch Ausnutzung von Knotenkom binationen berechnet werden.

14. Verfahren nach Anspruch 13, wobei die Boltzmann-Maschine eine Recurrent-Temporal-Restricted-Boltzmann-Maschine ist, die vorzugsweise durch eine RNN-Gaußsche dynamische Boltzmann-Maschine implementiert ist.

15. Verfahren nach Anspruch 12, wobei der Bestimmungsschritt umfasst:

   - das Erfassen und Aufzeichnen der Ausgaben von mindestens einer Teilmenge der realen Sensoren für eine vorbestimmte Anzahl von zeitlich aufeinanderfolgenden Abtastschritten, und
   - die Durchführung einer Kausalitätsanalyse, die Kausalitäten zwischen den aufgezeichneten Ausgaben der realen Sensoren bestimmt,

   wobei die Kausalitäten zwischen den aufgezeichneten Ausgaben der realen Sensoren für mindestens eine Teilmenge der Abtastungen bestimmt werden und wobei die für die Teilmenge der Abtastungen bestimmten Kausalitäten einer Nachbearbeitung unterzogen werden, um einen endgültigen Kausalitätssatz oder-Matrix zwischen den aufgezeichneten Ausgaben der realen Sensoren zu bestimmen, und
   wobei ein gerichteter zyklischer Graph (DCG) auf der Grundlage der bestimmten Kausalitäten erstellt wird,

wobei der DCG in einen gerichteten azyklischen Graphen (DAG) umgewandelt wird, wobei entweder der reale Sensor mit der höchsten oder derjenige mit der niedrigsten Kausalität als eine Wurzel für den gerichteten azyklischen Graphen genommen wird, und

wobei mindestens ein realer Sensor, der ein Blatt oder eine Wurzel in dem DAG bildet, als ersetzbar bestimmt wird.

**Revendications**

1. Procédé de détermination d'une configuration de capteurs dans un véhicule (10) qui comporte une pluralité de capteurs (42, 44, 46), comprenant les étapes consistant à :

   - établir une configuration préliminaire de capteurs pour le véhicule, laquelle configuration de capteurs comporte un premier nombre de capteurs réels, chacun d'entre eux émettant en sortie un signal de capteur réel ;
   - déterminer si au moins l'un des capteurs réels peut être remplacé par un capteur virtuel ;
   - transformer la configuration préliminaire de capteurs en une configuration finale de capteurs qui comporte un deuxième nombre de capteurs réels et au moins un capteur virtuel dont on a déterminé qu'il remplace au moins l'un des capteurs réels, le deuxième nombre étant inférieur au premier nombre,

   **caractérisé par** :
   l'étape de détermination comportant :

   - la détection et l'enregistrement des sorties d'au moins un sous-ensemble des capteurs réels, et
   - la réalisation d'une analyse de causalité qui détermine les causalités entre les sorties enregistrées du sous-ensemble de capteurs réels,
   dans lequel l'analyse de causalité comporte la construction d'un réseau de neurones parcomposant, CWNN (D4'), où chaque capteur réel du sous-ensemble de capteurs réels correspond à l'un des composants du CWNN, chaque composant étant formé par un sous-modèle de capteur virtuel (NN) qui est entraîné de manière à émulerun capteur réel respectif, en utilisant les sorties d'au moins certains des autres capteurs réels du sous-ensemble de capteurs réels.

2. Procédé selon la revendication 1, dans lequel l'étape d'apprentissage comporte l'application d'une pénalité induisant de la parcimonie aux premières couches cachées respectives d'au moins certains des capteurs virtuels.

3. Procédé selon la revendication 2, dans lequel la pénalité induisant une parcimonie est choisie dans la famille des régularisations Lasso par groupe.

4. Procédé selon la revendication 2, dans lequel les pénalités induisant une parcimonie sont choisies dans la famille des régularisations Lasso pondéré par ordre de groupe (GrOWL, *Group Order Weighted Lasso*).

5. Procédé selon l'une quelconque des revendications 2 à 4, dans lequel la pénalité induisant une parcimonie est optimisée à l'aide d'un optimiseur induisant la parcimonie de manière à générer un modèle parcimonieux.

6. Procédé selon la revendication 5, dans lequel le modèle parcimonieux est optimisé à l'aide d'un algorithme de descente de gradient proximal semi-stochastique (S PDG, *semi-stochastic Proximal Gradient Descent*).

7. Procédé selon la revendication 5, dans lequel le modèle parcimonieux est optimisé à l'aide d'un algorithme dit de « suivi du leader régularisé » (FtRL, *Follow the Regularized Leader)*.

8. Procédé selon l'une quelconque des revendications 1 à 7, dans lequel un vecteur de causalité est calculé pour chaque sous-modèle entraîné, et dans lequel les vecteurs de causalité sont concaténés afin de générer une matrice de causalité.

9. Procédé selon la revendication 8, dans lequel le calcul des vecteurs de causalité pour les sous-modèles respectifs comporte :

   - la conversion d'une matrice de poids de la première couche du capteur virtuel en une matrice d'affinité,
   - la division en grappes de la matrice d'affinité pour regrouper des caractéristiques similaires,

- le classement des grappes par ordre d'importance,
- le classement des caractéristiques dans chaque grappe par ordre d'importance,
- le calcule d'un classement global de caractéristiques en tenant compte des rangs des grappes et des rangs des caractéristiques,
- l'utilisation du classement global comme vecteur de causalité.

10. Procédé selon la revendication 9, dans lequel le classement des grappes par ordre d'importance est effectué par une méthode de tests de permutation.

11. Procédé selon la revendication 9, dans lequel le classement des grappes par ordre d'importance est effectué par une méthode de suppression par mise à zéro.

12. Procédé de détermination d'une configuration de capteurs dans un véhicule (10) qui comporte une pluralité de capteurs (42, 44, 46), comprenant les étapes consistant à :

- établir une configuration préliminaire de capteurs pour le véhicule, laquelle configuration de capteurs comporte un premier nombre de capteurs réels, chacun d'entre eux émettant en sortie un signal de capteur réel ;
- déterminer si au moins l'un des capteurs réels peut être remplacé par un capteur virtuel ;
- transformer la configuration préliminaire de capteurs en une configuration finale de capteurs qui comporte un deuxième nombre de capteurs réels et au moins un capteur virtuel, le deuxième nombre étant inférieur au premier nombre,

**caractérisé par** :
l'étape de détermination comportant :

- l'enregistrement des signaux des capteurs réels d'au moins un sous-ensemble du premier nombre de capteurs réels, et
- l'évaluation des signaux des capteurs réels enregistrés afin de déterminer si au moins un premier capteur parmi les capteurs réels peut être remplacé par un premier capteur virtuel qui reçoit au moins un signal de capteur réel d'un deuxième capteur réel et émet en sortie un signal de capteur virtuel qui émule le signal de capteur réel du premier capteur réel.

13. Procédé selon la revendication 12, dans lequel l'étape d'évaluation comporte l'utilisation d'une machine de Boltzmann ayant un certain nombre de noeuds visibles, chaque noeud visible représentant un capteur réel, et ayant un certain nombre de noeuds cachés, les noeuds cachés étant calculés en exploitant des combinaisons de noeuds.

14. Procédé selon la revendication 13, dans lequel la machine de Boltzmann est une machine de Boltzmann restreinte temporelle récurrente qui est de préférence implémentée par une machine de Boltzmann dynamique Gaussienne à réseau neuronal récurrent.

15. Procédé selon la revendication 12, dans lequel l'étape de détermination comporte :

- la détection et l'enregistrement des sorties d'au moins un sous-ensemble de capteurs réels pendant un nombre prédéterminé d'étapes d'échantillonnage se succédant dans le temps, et
- la réalisation d'une analyse de causalité qui détermine les causalités entre les sorties enregistrées des capteurs réels

dans lequel les causalités entre les sorties enregistrées des capteurs réels sont déterminées pour au moins un sous-ensemble d'échantillons et dans lequel les causalités déterminées pour le sous-ensemble d'échantillons sont soumises à un post-traitement afin de déterminer une matrice ou un ensemble de causalité final entre les sorties enregistrées des capteurs réels, et
dans lequel un graphe cyclique dirigé (GCD) est établi sur la base des causalités déterminées,
dans lequel le GCD est converti en graphe acyclique dirigé (GAD), dans lequel soit le capteur réel ayant la causalité la plus élevée soit celui ayant la causalité la moins élevée est pris comme racine du graphe acyclique dirigé, et
dans lequel au moins un capteur réel qui forme une feuille ou une racine, respectivement, dans le DAG est déterminé comme pouvant être remplacé.

Fig. 1

Fig. 2

**Fig. 3**

|  | X1 | X2 | X3 | X4 | X5 | X6 |
|---|---|---|---|---|---|---|
| X1 | - | 0.8 | 0 | 0 | 0.7 | 0 |
| X2 | 0 | - | 0.2 | 0.3 | 0 | 0 |
| X3 | 0 | 0 | - | 0.7 | 0 | 0 |
| X4 | 0 | 0 | 0.4 | - | 0 | 0 |
| X5 | 0.5 | 0.5 | 0 | 0 | - | 0 |
| X6 | 0 | 0 | 0 | 0 | 0 | - |

**Fig. 4**

$$X = \{X_1, X_2, X_3, X_4, X_5, X_6\}$$

**Fig. 5**

90

DCG → DAG

Fig. 6

74"

|          | Seng        | Stran       | Swl         | Swr         | Swl,wr      |
|----------|-------------|-------------|-------------|-------------|-------------|
| Seng     | 0           | 0.239184362 | 0.022071021 | 0.024978632 | 0.043047081 |
| Stran    | 0.437719868 | 0           | 0.146492178 | 0.19608402  | 0.228697872 |
| Swl      | 0.006369753 | 0.118544557 | 0           | 0.546471987 | 0.301191168 |
| Swr      | 0.00652841  | 0.136116594 | 1           | 0           | 0.301191168 |
| Swl,wr   | 0.008025169 | 0.385447973 | 1           | 0.546471987 | 0           |

Fig. 7

88"

Fig. 8

90"

..... 0

..... 1

..... 2

**Fig. 9**

100

104

Hidden
Nodes →

Visible
Nodes →

102    106

**Fig. 10**

104'

Hidden
Nodes →

100'

Visible
Nodes →

106'

102'

**Fig. 11**

104"

100"

102"

Engine Trans-    FL      FR
Speed mission Wheel Wheel
       Speed  Speed  Speed

**Fig. 12**

| Engine Speed | Transmission Speed | FL Whl Spd | FR Whl Spd |
|---|---|---|---|
| 2220 | 3142 | 130 | 130 |
| 2242 | 3144 | 131 | 130 |
| 2244 | 3145 | 131 | 130.5 |

**Fig. 13**

104'''

108

102'''

Engine Trans-    FL      FR
Speed mission Wheel Wheel
       Speed  Speed  Speed

**Fig. 14**

| FL Whl Spd | FR Whl Spd |
|---|---|
| 150 | 150 |
| 131 | 141 |
| 118 | 139 |

**Fig. 15**

120

**Fig. 16**

**Fig. 17**

**Fig. 18**

Fig. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008312756 A1

**Non-patent literature cited in the description**

- A study on the use of virtual sensors in vehicle control. **CANALE M. et al.** Decision and Control, 2008. CDC 2008. 47th IEEE Conference. IEEE, 09 December 2008